# FASCICULE DE BREVET EUROPEEN

(11) **EP 1 506 904 B1**
(45) Date de publication et mention de la délivrance du brevet: **06.09.2006**
(21) Numéro de dépôt: 04291682.5
(22) Date de dépôt: 02.07.2004
(51) Int. Cl.: B62D 1/16

(54) **Boîtier support pour colonne de direction**
Trägergehäuse für eine Lenksäule
Support case for a steering column

(30) Priorité: 14.08.2003 FR 0309953
(43) Date de publication de la demande: 16.02.2005
(73) Titulaire: Renault s.a.s., 92100 Boulogne Billancourt (FR)
(72) Inventeur: Juventin, Anne-Claire, 78310 Maurepas (FR)

(56) Documents cités:
- US-A- 5 426 993

## Description

La présente invention se rapporte à un boîtier support pour colonne de direction, notamment pour véhicule automobile.

Les véhicules automobiles présentent un habitacle isolé de l'extérieur en particulier par un tablier qui forme en partie la paroi de plancher, un certain nombre de commandes du véhicule traversant ce tablier. C'est notamment le cas des commandes de direction, pour lesquelles la colonne de direction traverse le tablier, depuis le volant situé à l'intérieur de l'habitacle jusqu'à la crémaillère située en dehors, à travers un trou de passage ; la crémaillère étant reliée aux organes de direction sur lesquels sont montées les roues du véhicule.

Ladite crémaillère est située au voisinage dudit trou de passage à l'extérieur de l'habitacle et éloignée dudit tablier, de telle sorte que le boîtier support qui permet de fermer l'espace qui s'étend entre le bord dudit trou de passage et la colonne de direction et qui joint la crémaillère doit être suffisamment profond. De surcroît, la crémaillère n'est pas nécessairement située dans l'axe dudit trou de passage, de sorte que le boîtier support qui doit joindre le tablier et la crémaillère n'est pas symétrique par rapport à l'axe dudit trou de passage, ce qui rend encore plus mal aisé sa réalisation avec une plaque métallique emboutie.

Par ailleurs, les outillages nécessaires à la mise en oeuvre de ces moyens usuels d'emboutissage sont relativement coûteux à remplacer pour réaliser un boîtier support d'une autre forme adapté à un autre type de véhicules automobiles.

Il a été imaginé de réaliser un boîtier support dans un matériau flexible, par exemple en élastomère, dont la base qui est surmontée d'une partie formant manchon, présente une gorge permettant de l'encastrer contre le bord du trou de passage ; la partie formant manchon étant destinée à entourer ladite colonne de direction.

Bien qu'un tel boîtier, décrit dans le document GB 2 343 718, soit adapté à joindre aisément la crémaillère et le tablier dans différentes situations, il est plus ou moins bien solidarisé au tablier, car la base est relativement déformable compte tenu du matériau flexible utilisé et il existe un risque de la voir se dégager du bord du trou de passage. En outre, l'extrémité dudit manchon doit être accroché à la crémaillère pour maintenir le boîtier en extension.

De plus, un boîtier de tel sorte est connu dans le document US 5 426 993.

Un but de la présente invention est de fournir un boîtier support qui soit adapté non seulement à être monté dans ledit trou de passage et à être solidaire de manière relativement irréversible de son bord mais aussi qui soit susceptible d'être réalisé dans des formes variées tout en étant rigide.

A cet effet, selon un premier objet, la présente invention propose un boîtier support pour colonne de direction, adapté à s'étendre entre le bord d'un trou de passage percé dans un tablier et ladite colonne de direction qui traverse ledit trou de passage de l'intérieur dudit tablier vers l'extérieur pour rejoindre une crémaillère située au voisinage dudit trou de passage, ledit boîtier support comprenant une première partie formant base apte à être montée sur ledit bord et une seconde partie formant manchon, présentant une extrémité percée d'une ouverture, ladite seconde partie étant adaptée à entourer ladite colonne de direction ; ladite première partie étant constituée d'une bague indéformable réalisée dans un premier matériau et ladite seconde partie qui surmonte ladite bague indéformable étant constituée d'une pièce rigide réalisée dans un second matériau, ladite bague indéformable et ladite pièce rigide formant une seule pièce monobloc.

Ainsi, une caractéristique de l'invention réside dans la mise en oeuvre d'un boîtier support formé d'une seule pièce rigide qui présente deux parties en matériaux distincts. Et de façon préférentielle, ledit second matériau est un matériau plastique, ladite pièce rigide étant obtenue par moulage dudit matériau plastique.

De la sorte, en choisissant un matériau plastique du type polymère, par exemple du polyéthylène ou du polyamide, non seulement la seconde partie rigide forme avec la première partie un boîtier globalement rigide, mais aussi la seconde partie qui forme manchon est susceptible d'être conformée à loisir en fonction des positions et des orientations relatives de la crémaillère et du tablier.

En outre, les matériaux présentent l'avantage d'être bien plus légers que l'acier et ils sont susceptibles d'être choisis en fonction des conditions de température ou d'agressivité de l'environnement dans lequel ils sont montés ; par exemple dans un environnement huileux si le maître cylindre du servofrein est proche.

De surcroît, il est bien plus aisé de former ladite seconde partie qui peut être cylindrique, par moulage d'un matériau plastique que par emboutissage d'une pièce en acier pour laquelle on obtient des angles de dépouille moins avantageux et par conséquent un manchon plus tronconique que cylindrique.

Avantageusement, le boîtier support est obtenu en surmoulant ladite pièce rigide sur ladite bague indéformable. De la sorte, le boîtier support est susceptible d'être adapté à différentes configurations, par exemple différents types de véhicule, en modifiant une portion de l'empreinte du moule correspondant à la seconde partie.

De manière préférentielle, ledit premier matériau est un matériau métallique de sorte que ladite bague indéformable peut être ainsi, parfaitement ajustée contre la paroi de tablier, elle-même métallique pour être collée, soudée ou rivetée.

Selon un mode de réalisation de l'invention avantageux, ladite bague indéformable présente une collerette adaptée à s'appliquer contre le pourtour dudit trou de passage dudit tablier. De la sorte, le boîtier support est susceptible d'être maintenu, la collerette en appui à plat contre la paroi de tablier autour du bord du trou de passage, tandis qu'il est procédé au rivetage, au soudage ou au collage de la bague indéformable sur le tablier. Préférentiellement, le boîtier support est introduit de l'intérieur du tablier à travers le trou de passage de façon à appliquer la surface externe de la bague indéformable contre la paroi intérieur du tablier et un cordon de mastic est appliqué, à cheval sur le congé de la bague indéformable et sur le bord du trou de passage qui le borde, pour relier ensemble le boîtier support et le tablier.

Selon une première variante de réalisation de l'invention particulièrement avantageuse, ladite pièce rigide est sensiblement cylindrique et surmonte coaxialement ladite bague indéformable. Ainsi, il n'est nul nécessaire de prévoir un trou de passage de grand diamètre pour monter le boîtier support et de plus, ses dimensions sont indépendantes de la distance entre la crémaillère et le tablier, les dimensions axiales de la pièce rigide étant adaptées en conséquence.

Selon une seconde variante de réalisation de l'invention préférentielle, la dite pièce rigide s'étend à partir de ladite bague indéformable en formant un coude de façon à joindre ladite crémaillère lorsqu'elle est maintenue en position excentrée et à distance par rapport audit trou de passage.

Selon un second objet, la présente invention propose un procédé de montage d'un ensemble de direction comprenant une crémaillère de laquelle fait saillie un arbre de transmission et un boîtier support conforme à l'invention, ledit procédé consistant à : monter ledit boîtier support en saillie vers l'extérieur dudit tablier sur le bord dudit trou de passage ; appliquer, depuis l'extérieur dudit tablier ladite crémaillère munie d'un joint autour dudit arbre de transmission contre ladite extrémité de ladite seconde partie, ledit arbre de transmission traversant ladite ouverture ; et, comprimer ledit joint en maintenant en position fixe ladite crémaillère rapprochée dudit boîtier support.

Ainsi, grâce au montage préalable du boîtier support conforme à l'invention sur le tablier en saillie vers l'extérieur, il est aisé de monter ensuite la crémaillère, depuis l'extérieur du tablier et de la maintenir en position fixe contre la partie rigide du boîtier support, l'arbre de transmission, ou queue de pignon, s'étendant dans cette partie rigide en traversant l'ouverture. L'arbre de transmission sera ensuite raccordé à la colonne de direction qui sera, elle, introduite depuis l'intérieur du tablier.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique axiale en élévation, d'un boîtier support selon une variante d'exécution conforme à l'invention ;
- la Figure 2 est une vue schématique en coupe axiale du boîtier support illustré sur la Figure 1, selon le plan II-II ; et,
- la Figure 3 est une vue schématique en coupe axiale illustrant le boîtier support reliant un tablier et une crémaillère d'un véhicule automobile.

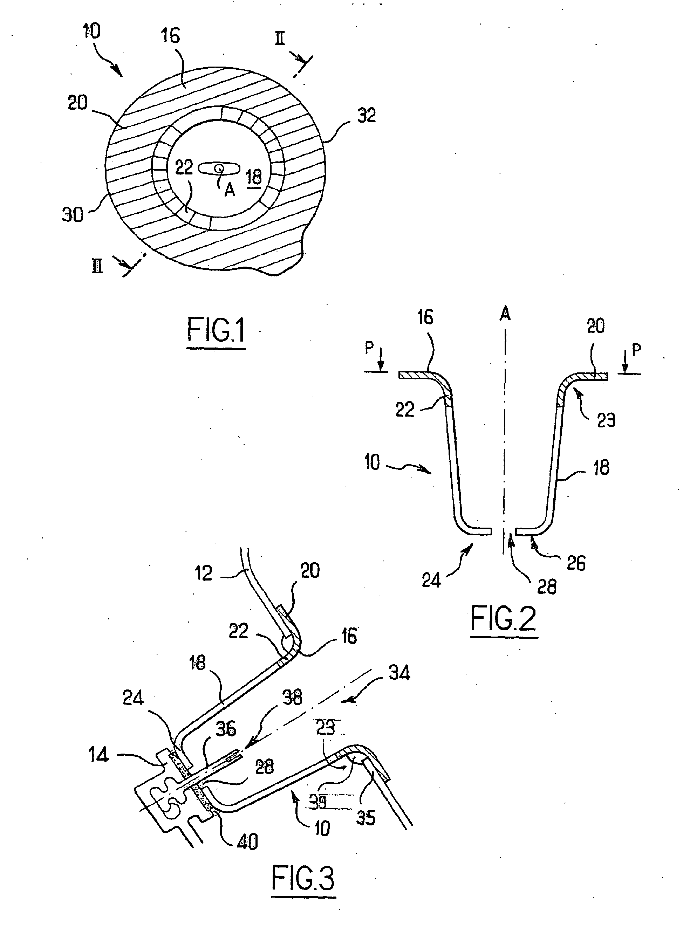

Les Figures 1 et 2 montrent selon deux représentations perpendiculaires l'une de l'autre, un boîtier support 10 conforme à l'invention, adapté à être ajusté entre un tablier 12 du plancher d'un véhicule automobile et la crémaillère 14 dudit véhicule que l'on trouve illustrés sur la Figure 3.

Le boîtier support 10 est réalisé d'une seule pièce en surmoulant une bague 16 constituée d'un matériau métallique, avec un matériau plastique, par exemple du polyéthylène, pour former une portion rigide 18 en forme de cloche.

De la sorte, la bague 16 est parfaitement solidaire de la portion rigide 18, le matériau plastique ayant adhéré au matériau métallique durant le surmoulage.

La bague 16 présente une partie en collerette 20 qui définit un plan moyen P tel qu'illustré sur la Figure 2, et une partie en couronne 22 que la portion rigide 18 formant manchon surmonte ; la partie en collerette 20 et la partie en couronne 22 sont reliées entre elles par une partie formant congé 23 de sorte que la bague 16 est susceptible d'être réalisée aisément par emboutissage.

La portion rigide 18, s'étend sensiblement dans le prolongement de la forme cylindrique que la partie en couronne 22 définie et elle présente une extrémité 24 qui forme un épaulement 26 et un perçage axial 28 ; l'épaulement 26 définissant un second plan moyen sensiblement parallèle au plan P et éloigné de celui-ci.

On va décrire en référence à la Figure 3, le mode de mise en oeuvre du boîtier support conforme à l'invention.

On retrouve sur cette Figure 3 le tablier dans lequel est percé un trou de passage 34 sensiblement circulaire, en regard de la crémaillère 14 et dont le bord définit un pourtour circulaire libre 35. Un arbre de transmission 36, plus communément appelé queue de pignon, fait saillie de la crémaillère 14 en direction dudit trou de passage 34. Cet arbre de transmission 36 présente une extrémité libre 38 destinée à être raccordée à l'arbre de la colonne de direction qui n'est pas représenté.

Le boîtier support est monté entre la crémaillère 14 et le tablier 12, la partie en collerette 20 étant maintenue en appui contre le pourtour circulaire 35 par des points de soudure, un cordon de mastic 39 appliqué, à cheval sur le congé 23 de la bague indéformable et sur le pourtour circulaire libre 35 qui le borde, permettant de rendre étanche la jonction et la portion rigide 18 s'étendant jusqu'à la crémaillère 14. L'extrémité 24 de la portion rigide 18 est jointe de manière hermétique à la crémaillère 14 en entourant l'arbre de transmission 36 qui traverse le perçage axial 28, grâce à un joint de tablier 40 maintenu comprimé autour de l'arbre de transmission 36, entre l'extrémité 24 et la crémaillère 14.

De la sorte, la crémaillère 14 et le tablier 12 sont reliés ensemble de manière étanche, bien qu'elle soit éloignée de lui et que la colonne de direction du véhicule s'étende depuis l'intérieur du véhicule jusqu'à la crémaillère 14.

La partie en couronne 22 de la bague 16 présente une longueur axiale qui est déterminée en fonction de l'épaisseur du tablier 12 et ce de manière à ce que le cordon de mastic puisse être appliqué uniquement sur des parties métalliques et non sur la portion rigide 18, pour assurer une meilleure liaison.

Grâce au boîtier support 10, réalisé par surmoulage d'une bague indéformable avec une matière plastique pour former la partie formant manchon, on peut non seulement s'affranchir d'un joint de tablier très épais adapté à compenser la faible profondeur des boîtiers support entièrement métalliques et emboutis, mais aussi réduire le diamètre du trou de passage de la colonne grâce à des valeurs de dépouilles moins contraignantes que celles de ces boîtiers supports entièrement métalliques.

Selon un autre objet la présente invention concerne un procédé de montage d'un ensemble de direction avec un boîtier support conforme à l'invention. Le procédé consiste tout d'abord, à monter le boîtier support en saillie vers l'extérieur du tablier sur le bord du trou de passage. Ensuite, on vient appliquer, depuis l'extérieur du tablier, la crémaillère qui est munie au préalable du joint sur sa face d'appui, autour dudit arbre de transmission contre l'extrémité de la seconde partie. Enfin, le joint est comprimé en maintenant la crémaillère en appui contre l'extrémité de la portion rigide.

Dans le but d'éviter le cisaillement du joint, la crémaillère sera entraînée contre l'extrémité de la portion rigide de façon que la face d'appui de la crémaillère sur laquelle repose le joint, soit parallèle au second plan moyen définit par l'épaulement de l'extrémité de la portion rigide.

Dans certaines configurations, il est impossible d'approcher la crémaillère perpendiculairement au plan du tablier et de maintenir l'arbre de transmission dans l'axe de la colonne. Ainsi, afin de faciliter le montage, d'une part la portion rigide est formée d'un coude pour joindre la crémaillère et le tablier et d'autre part, l'arbre de transmission qui n'est plus orienté dans l'axe de la colonne de direction, y est relié avec des moyens formant cardan.

## Revendications

1. Boîtier support (10) pour colonne de direction, adapté à s'étendre entre le bord d'un trou de passage (34) percé dans un tablier (12) et ladite colonne de direction qui traverse ledit trou de passage (34) de l'intérieur dudit tablier (12) vers l'extérieur pour rejoindre une crémaillère (14) située au voisinage dudit trou de passage (34), ledit boîtier support (10) comprenant une première partie formant base apte à être montée sur ledit bord et une seconde partie formant manchon, présentant une extrémité (24) percée d'une ouverture (28), ladite seconde partie étant adaptée à entourer ladite colonne de direction ;
**caractérisé en ce que** ladite première partie est constituée d'une bague indéformable (16) réalisée dans un premier matériau et **en ce que** ladite seconde partie qui surmonte ladite bague indéformable (16) est constituée d'une pièce rigide (18) réalisée dans un second matériau, ladite bague indéformable (16) et ladite pièce rigide (18) formant une seule pièce monobloc.

2. Boîtier support (10) selon la revendication 1, **caractérisé en ce que** ledit second matériau est un matériau plastique et **en ce que** ladite pièce rigide (18) est obtenue par moulage dudit matériau plastique.

3. Boîtier support (10) selon la revendication 2, **caractérisé en ce qu'**il est obtenu en surmoulant ladite pièce rigide (18) sur ladite bague indéformable (16).

4. Boîtier support selon les revendications 1 ou 2, **caractérisé en ce que** ledit premier matériau est un matériau métallique.

5. Boîtier support selon l'une quelconque des revendications 1 à 4, **caractérisé en ce que** ladite bague indéformable (16) présente une collerette (20) adaptée à s'appliquer contre le pourtour (35) dudit trou de passage (34) dudit tablier (12).

6. Boîtier support (10) selon l'une quelconque des revendications 1 à 5, **caractérisé en ce que** la dite pièce rigide (18) s'étend à partir de ladite bague indéformable (16) en formant un coude de façon à joindre ladite crémaillère (14).

7. Procédé de montage d'un ensemble de direction comprenant une crémaillère (14) de laquelle fait saillie un arbre de transmission (36), et un boîtier support (10) selon l'une quelconque des revendications 1 à 6, **caractérisé en ce qu**'il comprend les étapes suivantes :
- on monte ledit boîtier support (10) en saillie vers l'extérieur dudit tablier (12) sur le bord dudit trou de passage (34) ;
- on applique, depuis l'extérieur dudit tablier (12), ladite crémaillère (14) munie d'un joint (40) autour dudit arbre de transmission (36) contre ladite extrémité (24) de ladite seconde partie (18), ledit arbre de transmission (36) traversant ladite ouverture ; et,
- on comprime ledit joint (40) en maintenant en position fixe ladite crémaillère (14) rapprochée dudit boîtier support (10).

8. Procédé de montage selon la revendication 7, **caractérisé en ce que** ladite extrémité (24) présente un épaulement définissant un plan moyen et **en ce qu'**on applique ladite crémaillère (14) qui présente une face d'appui sur laquelle repose ledit joint (40) de façon que ladite face d'appui soit orientée sensiblement parallèle audit plan moyen.

## Claims

1. Support casing (10) for a steering column, adapted to extend between the edge of a through hole (34) formed in a dashboard (12) and the said steering column which passes through the said through hole (34) from the inside of the said dashboard (12) towards the outside to reach a rack (14) located in the vicinity of the said through hole (34), the said support casing (10) comprising a first part forming a base which can be mounted on the said edge and a second part forming a sleeve, having an end (24) pierced with an opening (28), the said second part being adapted to surround the said steering column;
**characterized in that** the said first part consists of a non-deformable ring (16) formed from a first material and **in that** the said second part which surmounts the said non-deformable ring (16) consists of a rigid part (18) formed from a second material, the said non-deformable ring (16) and the said rigid part (18) forming a one-piece unit.

2. Support casing (10) according to Claim 1, **characterized in that** the said second material is a plastics material and **in that** the said rigid part (18) is produced by moulding the said plastics material.

3. Support casing (10) according to Claim 2, **characterized in that** it is produced by overmoulding the said rigid part (18) on the said non-deformable ring (16).

4. Support casing according to Claims 1 or 2, **characterized in that** the said first material is a metallic material.

5. Support casing according to any one of Claims 1 to 4, **characterized in that** the said non-deformable ring (16) has a flange (20) adapted to bear on the periphery (35) of the said through hole (34) of the said dashboard (12).

6. Support casing (10) according to any one of Claims 1 to 5, **characterized in that** the said rigid part (18) extends from the said non-deformable ring (16) to form a bend in order to reach the said rack (14).

7. Method of mounting a steering assembly comprising a rack (14) from which a transmission shaft (36) projects, and a support casing (10) according to any one of Claims 1 to 6, **characterized in that** it comprises the following steps:
- the said support casing (10) is mounted so that it projects towards the outside of the said dashboard (12) on the edge of the said through hole (34);
- the said rack (14), provided with a joint (40) around the said transmission shaft (36), is placed, from the outside of the said dashboard (12), on the said end (24) of the said second part (18), the said transmission shaft (36) passing through the said opening; and
- the said joint (40) is compressed while the said rack (14) is kept in a fixed position close to the said support casing (10).

8. Method of mounting according to Claim 7, **characterized in that** the said end (24) has a shoulder defining a median plane and **in that** the said rack (14), which has a bearing face on which the said joint (40) rests, is placed in such a way that the said bearing face is orientated substantially parallel to the said median plane.

## Patentansprüche

1. Stützgehäuse (10) für eine Lenksäule, das sich zwischen dem Rand eines Durchgangsloches (34), das in ein Armaturenbrett (12) gebohrt ist, und der Lenksäule, die durch das Durchgangsloch (34) vom Inneren des Armaturenbretts (12) nach außen hindurchgeht, um sich an eine Zahnstange (14) anzuschließen, die sich in der Nähe des Durchgangsloches (34) befindet, erstreckt, wobei das Stützgehäuse (10) einen ersten Teil, der eine Basis bildet, die auf dem Rand montiert werden kann, und einen zweiten Teil umfasst, der eine Hülse bildet, die ein mit einer Öffnung (28) durchbohrtes Ende (24) aufweist, wobei der zweite Teil dazu ausgeführt ist, die Lenksäule zu umgeben,
**dadurch gekennzeichnet, dass** der erste Teil von einem nicht verformbaren Ring (16) gebildet ist, der aus einem ersten Material hergestellt ist, und dass der zweite Teil, der über dem nicht verformbaren Ring (16) angeordnet ist, von einem starren Teil (18) gebildet ist, der aus einem zweiten Material hergestellt ist, wobei der nicht verformbare Ring (16) und der starre Teil (18) ein einziges einstückiges Stück bilden.

2. Stützgehäuse (10) nach Anspruch 1, **dadurch gekennzeichnet, dass** das zweite Material ein Kunststoff ist, und dass der starre Teil (18) durch Formguss des Kunststoffes erhalten wird.

3. Stützgehäuse (10) nach Anspruch 2, **dadurch gekennzeichnet, dass** es durch Überformen des starren Teils (18) auf den nicht verformbaren Ring (16) erhalten wird.

4. Stützgehäuse nach einem der Ansprüche 1 oder 2, **dadurch gekennzeichnet, dass** das erste Material ein metallisches Material ist.

5. Stützgehäuse nach einem der Ansprüche 1 bis 4, **dadurch gekennzeichnet, dass** der nicht verformbare Ring (16) einen Kragen (20) aufweist, der derart ausgeführt ist, dass er sich an den Umfang (35) des Durchgangsloches (34) des Armaturenbrettes (12) anlegt.

6. Stützgehäuse (10) nach einem der Ansprüche 1 bis 5, **dadurch gekennzeichnet, dass** sich der starre Teil (18) vom nicht verformbaren Ring (16) weggehend erstreckt, wobei er einen Knick bildet, um sich an die Zahnstange (14) anzuschließen.

7. Verfahren zur Montage einer Lenkeinheit, umfassend eine Zahnstange (14), aus der eine Übertragungswelle (36) vorspringt, und ein Stützgehäuse (10) nach einem der Ansprüche 1 bis 6, **dadurch gekennzeichnet, dass** es folgende Schritte umfasst:
- Montage des Stützgehäuses (10) nach außen vorspringend in Bezug auf das Armaturenbrett (12) am Rand des Durchgangsloches (34);
- von außerhalb des Armaturenbrettes (12) Anlegen der Zahnstange (14), die mit einer Dichtung (40) um die Übertragungswelle (36) versehen ist, am Ende (24) des zweiten Teils (18), wobei die Übertragungswelle (36) durch die Öffnung hindurchgeht; und
- Zusammendrücken der Dichtung (40), wobei die Zahnstange (14) in fester Position nahe dem Stützgehäuse (10) gehalten wird.

8. Montageverfahren nach Anspruch 7, **dadurch gekennzeichnet, dass** das Ende (24) einen Absatz aufweist, der eine Mittelebene definiert, und dass die Zahnstange (14), die eine Stützfläche aufweist, auf der die Dichtung (40) liegt, derart angelegt wird, dass die Stützfläche im Wesentlichen parallel zur Mittelebene ausgerichtet ist.
